# EUROPÄISCHE PATENTSCHRIFT

(11) **EP 0 750 735 B1**
(45) Veröffentlichungstag und Bekanntmachung des Hinweises auf die Patenterteilung: **07.07.1999**
(21) Anmeldenummer: 96901293.9
(22) Anmeldetag: 15.01.1996
(51) Int. Cl.: G01B 11/16, G01M 17/02

(54) **BILDVERARBEITUNGSVERFAHREN ZUR ERMITTLUNG DER STRUKTURFESTIGKEIT EINES PRÜFOBJEKTES MIT DIFFUS STREUENDER OBERFLÄCHE**
IMAGE PROCESSING METHOD FOR DETERMINING THE STRUCTURAL STRENGTH OF A TEST OBJECT WITH A DIFFUSE-SCATTERING SURFACE
PROCEDE DE TRAITEMENT D'IMAGE PERMETTANT DE DETERMINER LA RESISTANCE STRUCTURALE D'UN OBJET A TESTER PRESENTANT UNE SURFACE A DISPERSION DIFFUSE

(30) Priorität: 16.01.1995 DE 19501073
(43) Veröffentlichungstag der Anmeldung: 02.01.1997
(73) Patentinhaber: NOVA C.O.R.D. AG, 9494 Schaan (LI)
(72) Erfinder: ROTTENKOLBER, Hans, D-83123 Amerang (DE)
(74) Vertreter: Hano, Christian, Dipl.-Ing.
(86) Internationale Anmeldenummer: EP9600187
(87) Internationale Veröffentlichungsnummer: WO9622507

(56) Entgegenhaltungen:
- US-A- 5 020 904
- APPLIED OPTICS, Bd. 32, Nr. 25, 1.September 1993, WASHINGTON, DC, US, Seiten 4719-4727, XP002002766 R. SPOOREN, A.A. DYRSETH, M. VAZ: "Electronic Shear Interferometry: application of a (double-)pulsed Laser"
- APPLIED OPTICS , Bd. 31, Nr. 25, 1.September 1992, NEW YORK, NY, US, Seiten 5320-5325, XP002002767 K.A. STETSON: "Phase-step Interferometry of Irregular Shapes by using an Edge-following Algorithm"
- J.OF THE OPTICAL SOCIETY OF AMERICA A, Bd. 11, Nr. 7, Juli 1994, WASHINGTON, DC, US, Seiten 2011-2015, XP002002768 ULF SCHNARS: "Direct Phase determination in Hologram Interferometry with use of digitally recorded Holograms"

## Beschreibung

Die Erfindung betrifft ein Verfahren zur Ermittlung der Strukturfestigkeit eines Prüfobjektes mit diffus streuender Oberfläche nach dem Oberbegriff des Patentanspruchs 1.

Ein gattungsgemäßes Verfahren ist aus der DE-OS 42 31 578 A1 bekannt. Bei diesem Verfahren wird ein Prüfobjekt mit kohärentem Licht bestrahlt und die vom Prüfobjekt zurückgestreute Strahlung in zwei Teilstrahlungen aufgeteilt. Die zwei Teilstrahlungen werden derart wieder zusammengeführt, daß die beiden Teilstrahlungen leicht verkippt sind (Shearing-Effekt). Die die Bildinformation tragenden Teilstrahlungen werden einem elektronischen Bildsensorsystem zugeführt. Dabei wird das Prüfobjekt durch die abbildende Komponente auf dem Bildsensor abgebildet. Die auf den Bildsensor auftreffende Strahlung wird nach einer A/D-Wandlung in digitale Signale umgewandelt. Die Oberfläche des Prüfobjekts hat zunächst den Zustand 1, nach einer aufgebrachten Verformung den Zustand 2. Die Aufzeichnung des Oberflächenzustandes 1 erfolgt derart, daß in einer ersten Bildfolge eine Teilstrahlung bezüglich der zweiten Teilstrahlung schrittweise phasenverschoben wird. Die Bildfolge wird typischerweise in dem temporären Speicher eines Rechners abgelegt. Von dem Oberflächenzustand 2 wird in derselben Weise eine zweite Bildfolge erzeugt. Die einzelnen Schritte der ersten und der zweiten Bildfolge werden in einem Rechner zu einem Modulo-2n-Bild weiterverarbeitet. Das Ziel der aufzubringenden Verformung besteht immer darin, Schwachstellen dadurch zu erkennen, daß solche Stellen eine signifikant andere Verformung als die Umgebung aufweisen. Das aus diesem Verfahren resultierende Bild ist einerseits das Ergebnis der konstruktiven und geometrischen Ausgestaltung des Prüfobjekts und andererseits eine Folge von Strukturinhomogenitäten. Der Nachteil dieses Verfahrens besteht darin, daß der Effekt von Strukturinhomogenitäten nur dann zu erkennen ist, wenn dieser Effekt signifikant größer ist als die konstruktiv oder geometrisch bedingten Effekte.

Der Erfindung liegt die Aufgabe zugrunde, das aus der DE-OS 42 31 578 A1 bekannte Verfahren derart weiterzuentwickeln, daß Strukturinhomogenitäten von konstruktiven und geometrischen Effekten auf einfache Weise unterschieden werden.

Ausgehend von dem gattungsgemäßen Stand der Technik wird diese Aufgabe durch die kennzeichnenden Merkmale des Patentanspruchs 1 gelöst. Vorteilhafte Ausführungsarten des erfindungsgemäßen Verfahrens sind Gegenstand der Patentansprüche 2 bis 5.

Die numerisch durchgeführte und in ein resultierendes Grauwertbild umgesetzte partielle Differenzierung eines zu einem Ausgangs-Grauwertbild verstetigten Modulo-2n-Bildes gestattet es, Strukturinhomogenitäten von konstruktiv oder geometrisch bedingten Effekten zu unterscheiden, da Strukturinhomogenitäten in der Regel größere Steigungen aufweisen als konstruktiv oder geometrisch bedingte Effekte. Dadurch, daß im numerischen Bildverarbeitungsprozeß vor der eigentlichen Differenzierung noch eine Grauwertverschiebung des Zweit-Grauwertbildes durchgeführt wird, gelingt sogar eine Erkennung der Steigungsrichtung und folglich die Zuordnung der untersuchten Strukturinhomogenität zum konkaven oder konvexen Typ.

Eine vorteilhafte Verfahrensführung besteht darin, das Prüfobjekt mit kohärentem Licht aus mehreren Laserdioden zu beleuchten, die jeweils einen Leuchtfleck auf dem Prüfobjekt erzeugen.

Wenn bei einer bestimmten Art von Prüfobjekten eine typische Strukturinhomogenität mit ellipsenähnlichem Verlauf und mit einer typischen Lageanordnung auftritt, wird das Verfahren vorteilhafterweise so durchgeführt, daß die Shearing- und Differenzierungsrichtung mit der Richtung der kurzen Halbachse der elliptisch ausgeprägten Strukturinhomogenität übereinstimmt.

Treten bei einer bestimmten Art von Prüfobjekten zwei typische Strukturinhomogenitäten mit ellipsenähnlichem Verlauf und mit zueinander orthogonalen typischen Lageanordnungen auf, wird als Shearing- und Differenzierungsrichtung vorteilhafterweise die Richtung gewählt, die mit beiden kurzen Ellipsenhalbachsen einen Winkel von 45° einschließt.

Vorteilhaft ist es, im resultierenden Grauwertbild Grauwertbereiche durch Farben zu markieren.

Das erfindungsgemäße Verfahren hat den Vorteil, daß sich im resultierenden Bild Strukturinhomogenitäten von konstruktiv oder geometrisch bedingten Effekten deutlich abheben und deshalb auf einfache Weise zu identifizieren sind. Ein weiterer Vorteil des erfindungsgemäßen Verfahrens besteht in der unmittelbar möglichen Zuordnung der jeweiligen Strukturinhomogenitäten zum konkaven oder konvexen Typ.

Ausführungsbeispiele der Erfindung werden nachstehend anhand von Zeichnungen näher erläutert. Es zeigt
- Fig. 1: die Grauwert-Verteilung aufgrund der Prüfgeometrie im Falle eines Reifens (Absenken des Innendrucks),
- Fig. 2: die tatsächliche Grauwert-Verteilung bei Einwirkung variabler Steifigkeit des Reifenquerschnitts,
- Fig. 3: die Verfahrensschritte Shearing - Differenzbildung,
- Fig. 4: die Auswirkung einer konvexen Verformung auf die Grauwert-Verteilung,
- Fig. 5: die Auswirkung einer konkaven Verformung auf die Grauwert-Verteilung,
- Fig. 6: Auswirkungen der Shearing-Differenzierungs-Richtung auf das Grauwert-Signal und
- Fig. 7: typische Strukturschwächen an einem Reifen.

Bei dem erfindungsgemäßen Verfahren wird das entsprechend dem aus der DE-OS 42 31 578 A1 gewonnene Modulo-2π-Bild zunächst in ein Grauwertbild derart umgesetzt, daß die Grauwerte der einzelnen Bildpunkte die Differenz der Verformung zweier benachbarter Punkte auf dem Prüfobjekt angeben. Hierfür geeignete Entfaltungsmethoden sind z.B. beschrieben in "Digitale Verarbeitung und Auswertung von Interferenzbildern", Wolfgang Osten, Akademie-Verlag Berlin, 1991, Seiten 138 bis 144 und in "Proceedings of the I. International Workshop on Automatic Processing of Fringe Patterns", Akademie-Verlag Berlin, 1989, Seiten 23 bis 31.

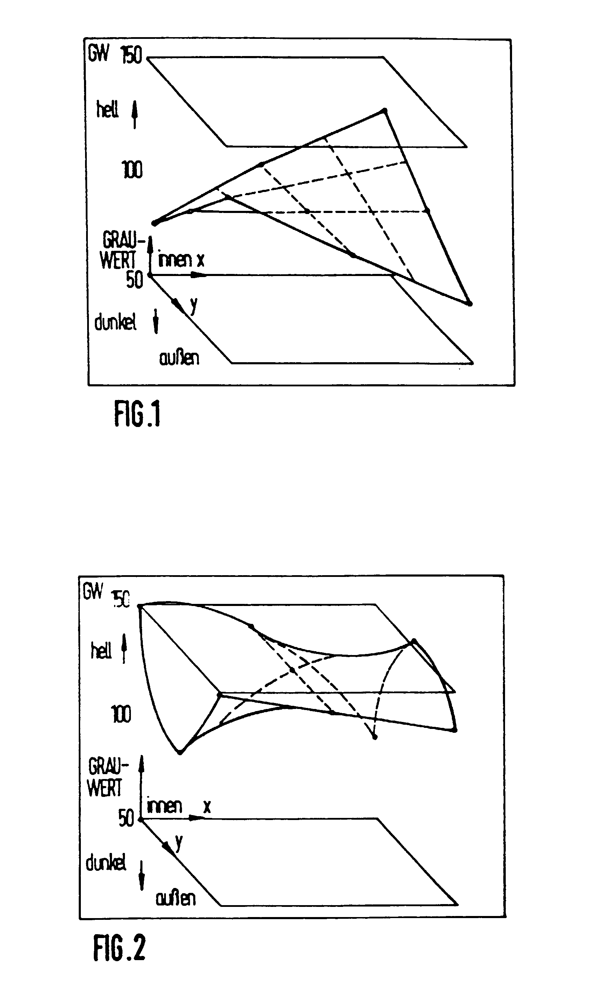

Die Grauwert-Verteilung wird durch die Verformungsdifferenz in Shearing-Richtung bestimmt, wobei die Shearing-Richtung definiert ist als die Verkippungsrichtung der einen Teilstrahlung gegen die andere Teilstrahlung. Typische Grauwert-Verteilungen sind in den Figuren 1 und 2 dargestellt.

Figur 1 zeigt für den Fall des tangentialen Shearings die theoretische Grauwert-Verteilung an der Seitenwand eines homogenen Reifens bei Druckabsenkung. Figur 2 zeigt die tatsächlich gemessene Grauwert-Verteilung. Dieser Verlauf ist im wesentlichen durch die konstruktive Ausbildung des Reifenquerschnitts bestimmt. Aus Figur 2 ist zu ersehen, daß der Effekt von Strukturinhomogenitäten nur dann zu erkennen ist, wenn dieser Effekt signifikant größer ist als die konstruktiv oder geometrisch bedingten Effekte. Das Grauwertbild (d.h. die Verformungs-Differenz) ist einerseits das Ergebnis der konstruktiven und geometrischen Ausgestaltung des Prüfobjektes und andererseits eine Folge von Strukturinhomogenitäten.

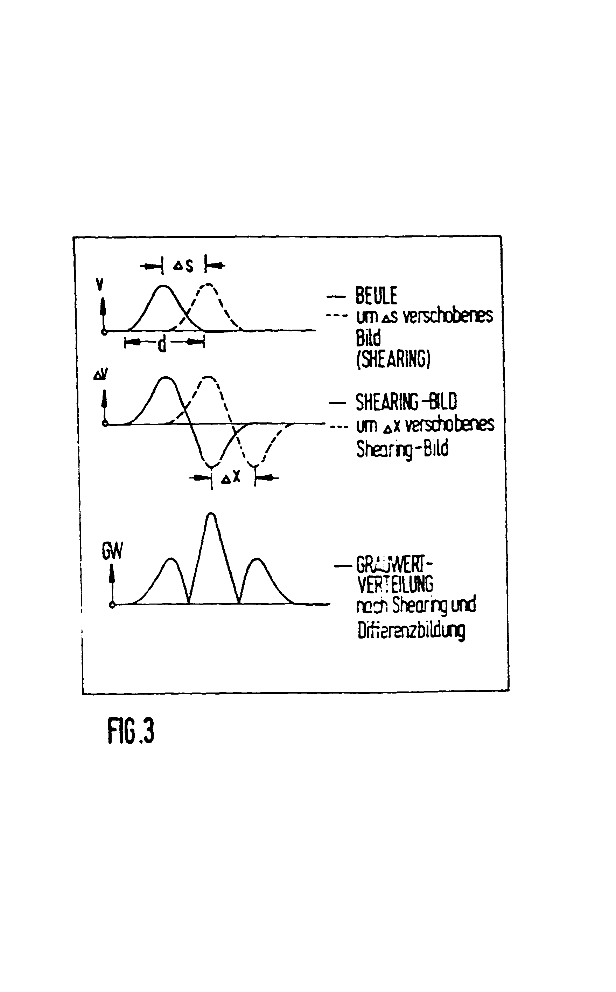

Da sich Strukturinhomogenitäten an Prüfobjekten von konstruktiv oder geometrisch bedingten Effekten durch eine größere Steigung unterscheiden, kann eine einfache Separation der Strukturinhomogenitäten von den konstruktiven und geometrischen Effekten durch partielles Differenzieren des Shearing-Bildes erreicht werden. Das Differenzieren erfolgt näherungsweise durch Subtraktion zweier geringfügig gegeneinander verschobener Bilder. Die beiden verschobenen Bilder haben dasselbe Ausgangsbild. Als Verschiebungsrichtung ("partielles Differential") wird vorteilhafterweise die Shearing-Richtung gewählt. In Figur 3 ist das Prinzip der einzelnen Stufen dieser Prozedur dargestellt. Das Wesen dieser Prozedur besteht darin, daß das optisch erzeugte Shearing-Bild geometrisch um den Betrag Δx verschoben und dem ursprünglichen Bild subtraktiv überlagert wird, wodurch eine entsprechende Grauwertverteilung entsteht. Durch Vorgabe von Grauwert-Schwellen können somit auf einfache Weise Strukturinhomogenitäten angezeigt werden. Vorteilhaft ist es, Grauwertbereiche durch Farben (z.B. grüngelb-rot) zu markieren. Dadurch wird die Gut/ Schlecht-Entscheidung erheblich vereinfacht.

In vielen Fällen ist es notwendig, das Vorzeichen der Inhomogenität (z.B. konkave oder konvexe Beule) zu kennen. Im Falle eines Reifens beispielsweise bewirkt ein "Stoß" eine Erhöhung der lokalen Strukturfestigkeit, gesucht werden jedoch Strukturschwächen. Die Unterscheidung gelingt nur durch Erkennung des Vorzeichens der Verformungsänderung bei Druckänderung im Reifeninneren.

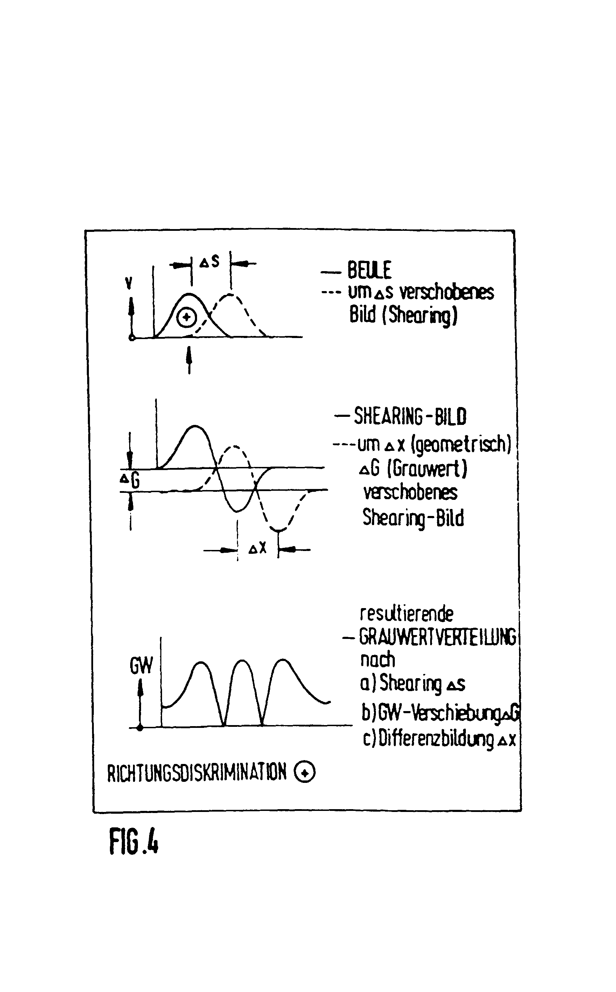

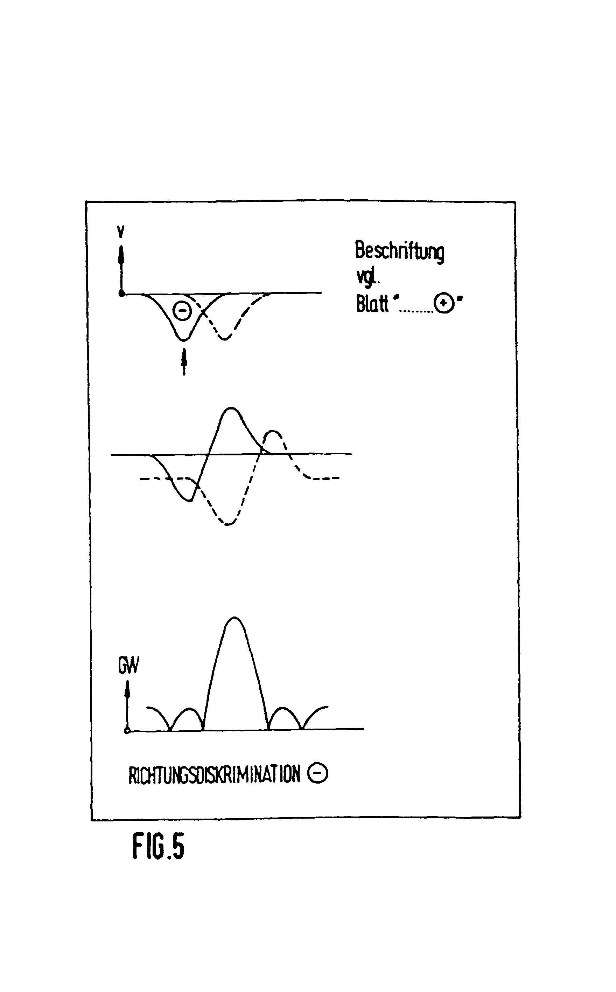

Die Erkennung des Vorzeichens wird dadurch ermöglicht, daß das zur Differenzbildung geometrisch verschobene Shearing-Bild auch in seinen Grauwerten verschoben wird. Die resultierende Grauwert-Verteilung unterscheidet sich dann signifikant abhängig vom Vorzeichen. Dies ist in den Figuren 4 und 5 dargestellt.

Es muß weiter darauf geachtet werden, daß bei komplizierten Konstruktionen oder Geometrien des Prüfobjekts der Prüfbereich so beschränkt wird, daß Strukturinhomogenitäten im Grauwertbild signifikant bleiben.

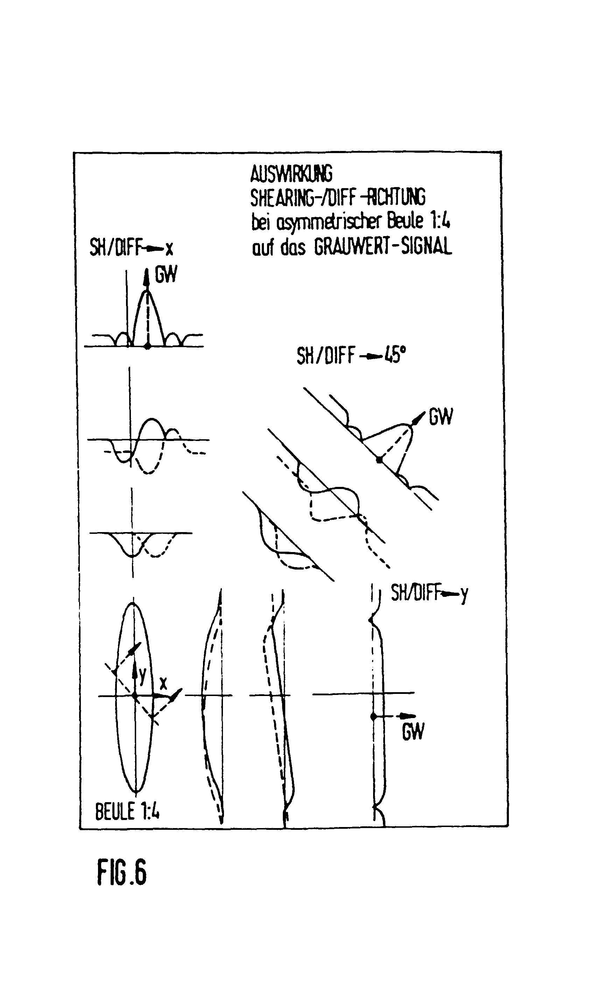

In vielen Fällen äußern sich Strukturschwächen als asymmetrische Beulen oder Falten. Die Shearingrichtung, bzw. die Richtung der Differenzbildung beeinflussen entscheidend die Ausprägung des durch die Beulen (Falten) bedingten Signals. In Fig. 6 ist diese Wirkung dargestellt. Bei der gewählten Ausbildung der Beule ergibt die Shearing-/Differenzrichtung x das beste Signal, unter 45° erhält man immer noch eine gute Ausprägung, während die Richtung y keinerlei Signifikanz des Grauwertbildes aufweist.

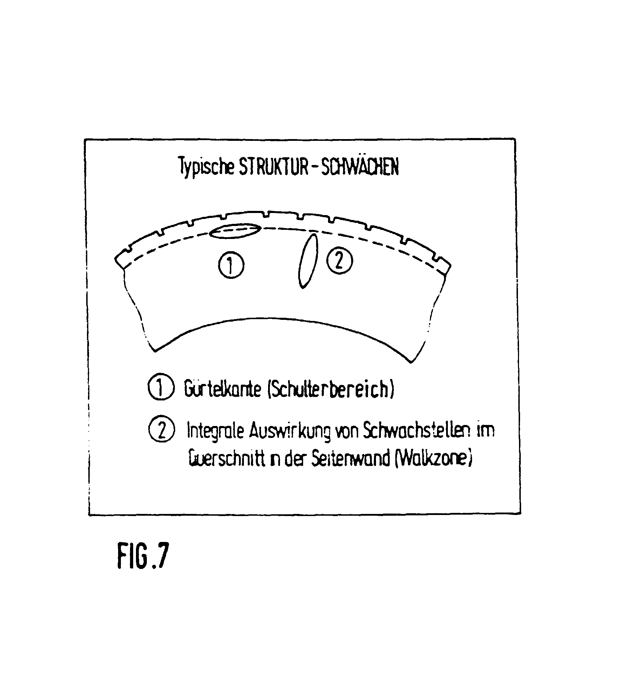

Für den Fall eines Reifens sind typische Strukturschwächen in Figur 7 dargestellt. Die Stelle "1" zeigt eine Gürtelkanten-Ablösung resp. Vorstufen der Ablösung. Sie zeigt typischerweise einen tangentialen Verlauf, die beste Indikation ist durch radiales Shearing/Differenzieren gegeben. Strukturschwächen über den Reifenquerschnitt äußern sich in radial ausgerichteten Falten (Stelle "2"); die beste Indikation ist durch tangentiales Shearing/Differenzieren gegeben. Für beide Fehlertypen bietet sich als akzeptabler Kompromiß die 45°-Richtung an.

## Patentansprüche

1. Verfahren zur Ermittlung der Strukturfestigkeit eines Prüfobjektes mit diffus streuender Oberfläche, bei dem
- das Prüfobjekt mit kohärentem Licht beleuchtet wird,
- die vom Prüfobjekt zurückgestreute Strahlung in einem Zweistrahl-Interferometer in zwei Teilstrahlungen aufgeteilt wird,
- in dem Zweistrahl-Interferometer die eine der beiden Teilstrahlungen gegen die andere Teilstrahlung verkippt wird,
- in dem Zweistrahl-Interferometer eine der beiden Teilstrahlungen schrittweise phasenverschoben wird,
- die von dem Prüfobjekt zurückgestreute und in dem Zweistrahl-Interferometer in die zwei Teilstrahlungen aufgeteilte und wieder zusammengeführte Strahlung durch die Oberfläche des Prüfobjektes abbildende Komponenten mit großer Öffnung einem elektronischen Bildsensorsystem zugeführt wird,
- die von dem Bildsensorsystem abgegebenen Signale digitalisiert und in einem Bildverarbeitungssystem zu einem Modulo-2π-Bild weiterverarbeitet werden und das Modulo-2π-Bild zu einem Ausgangs-Grauwertbild verstetigt wird, dadurch gekennzeichnet, daß das Ausgangs-Grauwertbild in der Weise partiell differenziert wird, daß ein zweites, dem Ausgangs-Grauwertbild gleiches Grauwertbild erzeugt wird und dieses gegen das Ausgangs-Grauwertbild in Shearing-Richtung geometrisch verschoben und um einen über den gesamten Bildbereich konstanten Grauwert verändert wird und das so manipulierte Zweit-Grauwertbild von dem Ausgangs-Grauwertbild subtrahiert wird und damit ein resultierendes Grauwertbild entsteht.

2. Verfahren nach Anspruch 1, dadurch gekennzeichnet, daß das Prüfobjekt mit kohärentem Licht aus mehreren Laserdioden beleuchtet wird, die jeweils einen Leuchtfleck auf dem Prüfobjekt erzeugen.

3. Verfahren nach Anspruch 1 oder Anspruch 2, dadurch gekennzeichnet, daß, wenn bei einer bestimmten Art von Prüfobjekten eine typische Strukturinhomogenität mit ellipsenähnlichem Verlauf und typischerweise in einer bestimmten Lageorientierung auftritt, als Shearing- und Differenzierungsrichtung die Richtung der kurzen Halbachse dieser elliptisch ausgeprägten Strukturinhomogenität gewählt wird.

4. Verfahren nach Anspruch 1 oder Anspruch 2, dadurch gekennzeichnet, daß, wenn bei einer bestimmten Art von Prüfobjekten zwei typische Strukturinhomogenitäten mit ellipsenähnlichem Verlauf und zueinander orthogonalen typischen Lageanordnungen auftreten, als Shearing- und Differenzierungsrichtung die Richtung gewählt wird, die mit jeder der beiden kurzen Ellipsenhalbachsen einen Winkel von 45° einschließt.

5. Verfahren nach einem der vorhergehenden Ansprüche, dadurch gekennzeichnet, daß im resultierenden Grauwertbild Grauwertbereiche durch Farben markiert werden.

## Claims

1. A method of determining the structural strength of a test object with a diffuse-scattering surface, in which
- the test object is illuminated with coherent light,
- the radiation back-scattered by the test object is split into two partial radiations in a two-beam interferometer,
- in the two-beam interferometer one of the two partial radiations is tilted in relation to the other partial radiation,
- in the two-beam interferometer one of the two partial radiations is phase-shifted incrementally,
- the radiation back-scattered by the test object and split into the two partial radiations and reunited in the two-beam interferometer is fed by components imaging the surface of the test object with a large aperture to an electronic image sensor system,
- the signals emitted by the image sensor system are digitised and are further processed in an image-processing system into a modulo-2π image and the modulo-2π image is smoothed into an initial greyscale value image, characterised in that the initial greyscale value image is partly differentiated in such a way that a second greyscale value image equal to the initial greyscale value image is produced and it is geometrically shifted in shearing direction relative to the initial greyscale value image and is varied by a constant greyscale value over the entire image range and the second greyscale value image manipulated in this way is subtracted from the initial greyscale value image and a resultant greyscale value image is thereby produced.

2. A method according to Claim 1, characterised in that the test object is illuminated with coherent light from a plurality of laser diodes which each produce a light spot on the test object.

3. A method according to Claim 1 or Claim 2,
characterised in that if, with a particular type of test object, a typical structural inhomogeneity with ellipse-like curve and typically in a certain positional orientation occurs, the direction of the short semiaxis of this elliptically distinct structural inhomogeneity is chosen as the shearing and differentiating direction.

4. A method according to Claim 1 or Claim 2,
characterised in that if, with a particular type of test object, two typical structural inhomogeneities with ellipse-like curve and mutually orthogonal typical position arrangements occur, there is chosen as the shearing and differentiating direction the direction which forms an angle of 45° with each of the two short ellipse semiaxes.

5. A method according to any one of the preceding Claims, characterised in that in the resultant greyscale value image the greyscale value regions are marked by colours.

## Revendications

1. Procédé permettant de déterminer la résistance structurale d'un objet à tester présentant une surface à dispersion diffuse, dans lequel
- l'objet à tester est éclairé avec une lumière cohérente,
- le rayonnement dispersé en retour par l'objet à tester est partagé en deux rayonnements partiels dans un interféromètre à double faisceau,
- dans l'interféromètre à double faisceau, l'un des deux rayonnements partiels est incliné par rapport à l'autre rayonnement partiel,
- dans l'interféromètre à double faisceau, l'un des deux rayonnements partiels est décalé de phase pas à pas,
- le rayonnement dispersé en retour par l'objet à tester, séparé dans l'interféromètre à double faisceau en deux rayonnements partiels puis à nouveau rassemblé, est amené à un système de détection d'image électronique par des composants de grande ouverture formant une image de la surface de l'objet à tester,
- les signaux délivrés par le système de détection d'image sont digitalisés et transformés dans un système de traitement d'images en une image modulo 2π et l'image modulo 2π est rendue continue pour obtenir une image de valeurs de gris de départ, caractérisé en ce que l'image de valeurs de gris de départ est différentiée de façon partielle de telle sorte qu'une deuxième image de valeurs de gris, semblable à l'image de valeurs de gris de départ, est produite et que celle-ci est décalée géométriquement par rapport à l'image de valeurs de gris de départ dans la direction de Shearing et est modifiée d'une valeur de gris constante sur l'ensemble du domaine de l'image et que la deuxième image de valeurs de gris ainsi manipulée est soustraite à l'image de valeurs de gris de départ et que se forme ainsi une image de valeurs de gris résultante.

2. Procédé selon la revendication 1, caractérisé en ce que l'objet à tester est éclairé avec une lumière cohérente à partir de plusieurs diodes lasers qui produisent chacune sur l'objet à tester une tache lumineuse.

3. Procédé selon la revendication 1 ou la revendication 2, caractérisé en ce que si pour un certain type d'objets à tester, il apparaît un manque d'homogénéité de structure typique avec une allure ellipsoïdale et typiquement avec une disposition déterminée, on choisit comme direction de Shearing et de différenciation la direction du petit axe de ce manque d'homogénéité de structure formé de façon elliptique.

4. Procédé selon la revendication 1 ou la revendication 2, caractérisé en ce que si pour un certain type d'objets à tester, il apparaît deux manques d'homogénéité de structure typiques avec une allure ellipsoïdale et avec des dispositions relatives orthogonales typiques, on choisit comme direction de Shearing et de différenciation la direction qui forme avec les deux petits axes d'ellipse un angle de 45°.

5. Procédé selon l'une des revendications précédentes, caractérisé en ce que dans l'image de valeurs de gris résultante, les domaines de valeurs de gris sont marqués par des couleurs.
